# EUROPEAN PATENT SPECIFICATION

(11) **EP 2 999 023 B1**
(45) Date of publication and mention of the grant of the patent: **14.03.2018**
(21) Application number: 15185740.6
(22) Date of filing: 17.09.2015
(51) Int. Cl.: H01M 2/02, H01M 2/08

(54) **SECONDARY BATTERY**
SEKUNDÄRBATTERIE
BATTERIE SECONDAIRE

(30) Priority: 17.09.2014 KR 20140123699
(43) Date of publication of application: 23.03.2016
(73) Proprietor: Samsung SDI Co., Ltd., Gyeonggi-do 17084 (KR)
(72) Inventor: JUNG, Kangkook, 17084 Gyeonggi-do (KR)
(74) Representative: Mounteney, Simon James

(56) References cited:
- US-A1- 2006 263 681
- US-A1- 2008 096 105
- US-A1- 2012 009 443
- US-A1- 2012 015 217

## Description

### BACKGROUND

### 1. Field

The invention relates to a secondary battery.

### 2. Description of the Related Art

Unlike a primary battery which cannot be recharged, a secondary battery, which can be repeatedly charged and discharged, is economical and environment-friendly, and thus, it is encouraged for use. Recently, types of electronic devices using the secondary battery have been diversified, and designs of the electronic devices become an important factor in determining the purchase of the electronic devices.

For example, various wearable computer technologies which use the secondary battery as a power supply source and applications of the wearable computer technologies have been developed and released. Also, electronic devices such as mobile phones and laptop computers have predetermined curved surfaces for an ergonomic design.

A shape of the secondary battery for operating the electronic devices needs to be changed in various ways, for example, bending, according to shapes of the electronic devices.

US2006/263681A1, US2012/015217A1, US2008/096105A1 and US 2012/009443A1 each disclose a secondary battery in which a pouch is enclosed within some form of rigid shell or casing.

### SUMMARY

The present invention sets out to provide a secondary battery that may easily change its shape.

Additional aspects will be set forth in part in the description which follows and, in part, will be apparent from the description, or may be learned by practice of the presented embodiments.

According to the invention, a secondary battery includes the features of claim 1. Preferred embodiments of the invention are defined in the dependent claims 2 to 14.

### BRIEF DESCRIPTION OF THE DRAWINGS

The above and/or other aspects of the invention will become apparent and more readily appreciated from the following description of embodiments of the invention, taken in conjunction with the accompanying drawings in which:
FIG. 1 is a perspective view of a secondary battery according to an embodiment of the invention;
FIG. 2 is a development view of an exterior member of FIG. 1;
FIG. 3 is a cross-sectional view taken along a line III-III' of FIG. 1;
FIG. 4 is a perspective view of a secondary battery according to another embodiment of the invention;
FIG. 5 is a development view of an exterior member of FIG. 4;
FIG. 6 is a cross-sectional view taken along a line IV-IV' of FIG. 4;
FIG. 7 is a perspective view of a secondary battery according to another embodiment of the invention; and
FIG. 8 is a development view of a first exterior member and a second exterior member of FIG. 7.

### DETAILED DESCRIPTION

The present invention will now be described more fully with reference to the accompanying drawings, in which embodiments of the invention are shown. The invention may, however, be embodied in many different forms and should not be construed as being limited to the embodiments set forth herein; rather, these embodiments are provided so that this disclosure will be thorough, and will convey the concept of the invention to those skilled in the art. In the drawings, the thicknesses of layers and regions are exaggerated for clarity. The terms used in the present specification are merely used to describe particular embodiments, and are not intended to limit the present invention. An expression used in the singular encompasses the expression of the plural, unless it has a clearly different meaning in the context. In the present specification, it is to be understood that the terms such as "including", "having", and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. While such terms as "first", "second", etc., may be used to describe various components, such components must not be limited to the above terms. The above terms are used only to distinguish one component from another.

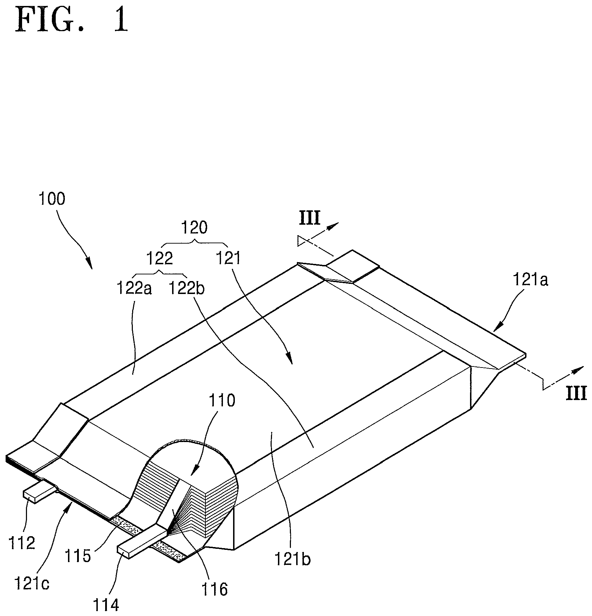

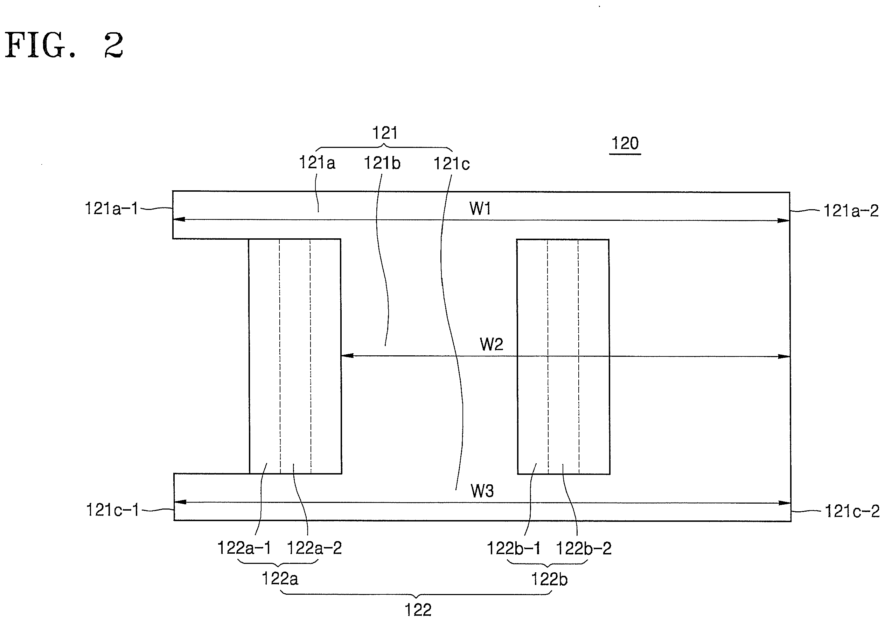

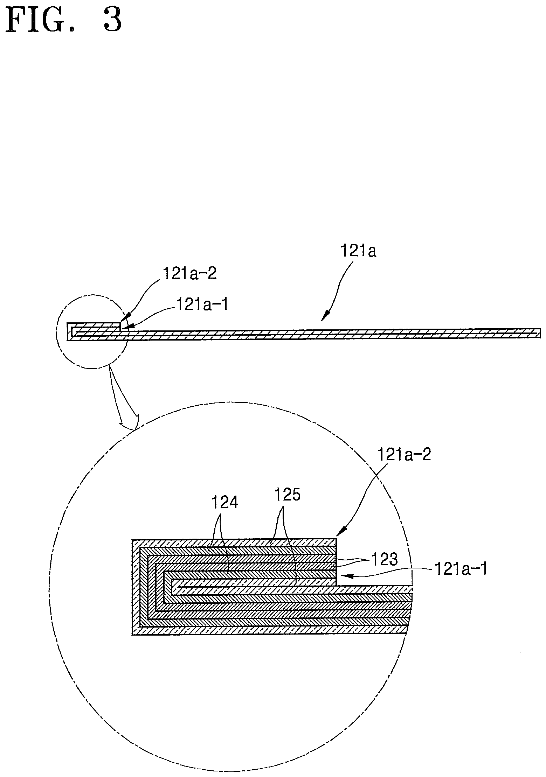

FIG. 1 is a perspective view of a secondary battery 100 according to an embodiment of the invention. FIG. 2 is a development view of an exterior member 120 of FIG. 1. FIG. 3 is a cross-sectional view taken along a line III-III' of FIG. 1.

Referring to FIGS. 1 through 3, the secondary battery 100 may include an electrode assembly 110 and an exterior member 120 sealing the electrode assembly 110.

The electrode assembly 110 may include a positive electrode plate, a negative electrode plate, and a separator interposed therebetween. For example, the positive electrode plate, the separator, and the negative electrode plate may be sequentially stacked to form the electrode assembly 110.

The positive electrode plate may include a positive active material portion which is coated with a positive active material and a positive non-coated portion which is not coated with the positive active material. The positive active material portion is formed by coating, for example, a portion of at least one surface of an aluminum (Al) plate the positive active material, and the other portion of the surface of the aluminum plate which is not coated with the positive active material may be the positive non-coated portion. The positive active material may be a lithium-containing transition metal oxide such as lithium cobalt oxide (LiCoO₂), lithium nickel oxide (LiNiO₂), lithium manganese oxide (LiMnO₂), and lithium permanganate (LiMnO₄) or a lithium-chalcogenide compound.

The negative electrode plate may include a negative active material portion which is coated with a negative active material and a negative non-coated portion which is not coated with the negative active material. The negative active material portion may be formed by coating, for example, a portion of at least one surface of a copper (Cu) plate with the negative active material. The other portion of the surface of the copper plate which is not coated with the negative active material may be the negative non-coated portion. The negative active material may be a carbon material such as crystalline carbon, amorphous carbon, a carbon composite, and carbon fiber, a lithium metal, or a lithium alloy.

The separator may be manufactured by coating at least one material selected from the group consisting of polyethylene (PE), polystyrene (PS), polypropylene (PP), and a co-polymer including PE and PP with a polyvinylidene fluoride-hexafluoropropylene (PVDF-HFP) co-polymer, but is not limited thereto.

A first electrode tab 112 and a second electrode tab 114 may be electrically connected to the electrode assembly 110. In particular, collectors 116 are respectively attached to the positive non-coated portion and the negative non-coated portion and may be connected to the first electrode tab 112 or the second electrode tab 114. The first electrode tab 112 and the second electrode tab 114 are exposed to the outside by penetrating a sealing unit 115 to which the exterior member 120 is attached. The electrode assembly 110 may be charged or discharged through the first electrode tab 112 and the second electrode tab 114.

A shape of the exterior member 120 may vary. For example, a single exterior member 120 may be formed, or a plurality of exterior members 120 maybe formed. Hereinafter, however, a case where one exterior member 120 is formed will be described in detail for convenience of description.

The exterior member 120 may include a pouch 121 which is flexible and a can 122 which is connected to the pouch 121 and is formed of a material having a greater hardness than that of the pouch 121. In this case, the pouch 121 may include first insulating layers 123, metal layers 124, and second insulating layers 125 which are sequentially stacked. In particular, the first insulating layers 123 and the second insulating layers 125 may be formed of PP, polyethyleneterephthalate (PET), nylon, etc., and the metal layers 124 may be formed of Al, steel, stainless steel, etc. The pouch 121 may be variously formed. For example, the pouch 121 may have a trilayer structure in which the first insulating layers 123 formed of PP, the metal layers 124 formed of Al, and the second insulating layers 125 formed of PET are stacked.

The pouch 121 may include a first sealing portion 121a, a pouch body 121b, and a second sealing portion 121c. In this case, the first sealing portion 121a, the pouch body 121b, and the second sealing portion 121c may include the first insulating layers 123, the metal layers 124, and the second insulating layers 125 which are described above.

As described above, the can 122 may be formed of a material having a greater hardness than that of the pouch 121. For example, the can 122 may be formed of a metal such as Al or an Al alloy.

The pouch 121 and the can 122 may be connected to each other through a thermal bonding process. More specifically, the pouch 121 and the can 122 may be connected to each other through a usual thermal bonding process by applying heat ranging from about 1500 to about 2000°C for about 1 to 5 seconds at a pressure ranging from about 0.1 to about 0.5 MPa by using a well-known sealing apparatus.

The pouch 121 and the can 122 may be connected to each other by using various methods. For example, the pouch 121 is rectangular-shaped, and the can 122 may be inserted into the pouch 121. In this case, as described above, the pouch 121 may be connected to the can 122 through the thermal bonding process as described above. In addition, the pouch 121 may be formed as a shape 'I' (refer to FIG. 2A) or '[' (refer to FIG. 2B). In this case, the can 122 may be installed in a center portion of the pouch 21 or inside the pouch 121. However, the pouch 121 is not limited to the above and may have various shapes. Hereinafter, a case where the pouch 121 is formed in the shape '[' will be described in detail for convenience of description.

Also, in that case, a plurality of cans 122 may be included in the exterior member 120, may be spaced apart from each other, and may be connected to each other by the pouch 121. In this regard, a single pouch 121 or a plurality of pouches 121 may be formed. In particular, if the plurality of pouches 121 are included in the exterior member 120, the cans 122 and the pouches 121 may be alternately arranged, and the pouches 121 may be respectively connected to the cans 122 in order to surround a part of an exterior surface of each of the cans 122. In this case, the pouches 121 may longer than the cans 122.

Hereinafter, a case where one pouch 121 is included in the exterior member 120 and is formed in the shape '[' and two cans 122 are included in the exterior member 120 will be described in detail for convenience of description.

In more detail, as described above, the pouch 121 may include the first sealing portion 121a, the pouch body 121b, and the second sealing portion 121c. In this case, the can 122 may include a first can 122a which is installed in a space formed by the first sealing portion 121a, the pouch body 121b, and the second sealing portion 121c, and a second can 122b which is installed inside the pouch body 121b.

Upon reviewing a method of manufacturing the secondary battery 100 by using the exterior member 120, the pouch 121 and the can 122 are respectively formed and thermal-bonded to each other, and thus one exterior member 120 may be manufactured. Also, during the manufacture of the exterior member 120, the above-described electrode assembly 110 may be manufactured.

When the above process is completed, the exterior member 120 is bent, and a space may be formed in the exterior member 120. More specifically, methods of bending the exterior member 120 may vary. For example, the space may be formed by applying pressure to a part of the exterior member 120 such that the part may be bent. In this case, at least one of the first can 122a and the second can 122b may be arranged in a bent portion of the exterior member 120. For example, the first can 122a may be arranged in the bent portion of the exterior member 120. As another example, the second can 122b may be arranged in the bent portion of the exterior member 120. As another example, the first can 122a and the second can 122b may be arranged in the bent portion of the exterior member 120. In this case, the first can 122a and the second can 122b may face each other. Hereinafter, a case where the first can 122a and the second can 122b are arranged to face each other in the bent portion of the exterior member 120 will be described in detail for convenience of description.

As described above, if the exterior member 120 is bent, the first can 122a and the second can 122b may be bent. In this case, the first can 122a may include first bending portions 122a-1 formed to be bent and a first can body portion 122a-2 connected to the first bending portions 122a-1 and forming a side surface of the secondary battery 100. A pair of first bending portions 122a-1 are formed and, in particular, may be arranged to face each other on both sides of the first can body portion 122a-2 with respect to the first can body portion 122a-2.

Like the first can 122a, the second can 122b may include second bending portions 122b-1 and a second can body portion 122b-2. In this case, a pair of second bending portions 122b-1 may exist and may be arranged to face each other on both sides of the second can body portion 122b-2 with respect to second can body portion 122b-2..

As described above, if the first can 122a and the second can 122b are bent, each first bending portion 122a-1 and each second bending portion 122b-1 may be arranged on the same plane. Also, the first can body portion 122a-2 and the second can body portion 122b-2 may be arranged to face each other. In this case, an overall shape of the exterior member 120 may be similar to a rectangular pillar.

After the above-described process is completed, each portion of the pouch 121 and the can 122 are thermal-bonded, and thus an exterior surface of the exterior member 120 may have a closed-loop shape. In this case, both ends of the first sealing portion 121a may be thermal-bonded. Also, the pouch body 121b and the first can 122a may be thermal-bonded. Both ends of the second sealing portion 121c may be thermal-bonded.

More specifically, the first sealing portion 121a may include a first bonding portion 121a-1 forming one end of the first sealing portion 121a and a second bonding portion 121a-2 forming another end thereof. In this case, the first bonding portion 121a-1 may protrude beyond an end of the first can 122a toward the outside.

In this case, a width W1 of the first sealing portion 121a and a width W3 of the second sealing portion 121c may be different from a width W2 of the pouch body 121b. For example, the width W1 of the first sealing portion 121a and the width W3 of the second sealing portion 121c may be larger than the width W2 of the pouch body 121b. That is, the width W1 of the first sealing portion 121a and the width W3 of the second sealing portion 121c may be larger than the width W2 of the pouch body 121b, thereby sufficiently securing a length used to fold and bend the first sealing portion 121a and the second sealing portion 121c when the pouch body 121b is bonded to the first can 122a.

The first bonding portion 121a-1 and the second bonding portion 121a-2 may be connected to each other through thermal bonding. More specifically, when the first bonding portion 121a-1 and the second bonding portion 121a-2 are thermal-bonded, one of the first bonding portion 121a-1 and the second bonding portion 121a-2 may be folded to overlap a same surface. For example, the first bonding portion 121a-1 may be folded such that the first insulating layers 123 of the first bonding portion 121a-1 contact each other or the second insulating layers 125 of the first bonding portion 121a-1 contact each other. Also, the second bonding portion 121a-2 may be folded such that the first insulating layers 123 of the second bonding portion 121a-2 contact each other or the second insulating layers 125 of the second bonding portion 121a-2 contact each other. In this case, when one of the first bonding portion 121a-1 and the second bonding portion 121a-2 is folded to allow the first insulating layers 123 to contact each other, the second insulating layers 125 of the first bonding portion 121a-1 or the second insulating layers 125 of the second bonding portion 121a-2 may be arranged in a space in which the exterior member 120 is formed. On the other hand, when one of the first bonding portion 121a-1 and the second bonding portion 121a-2 is folded to allow the second insulating layers 125 to contact each other, the first insulating layers 123 of the first bonding portion 121a-1 or the first insulating layers 123 of the second bonding portion 121a-2 may be exposed to the outside the space in which the exterior member 120 is formed. Hereinafter, a case where the first bonding portion 121a-1 is folded such that the second insulating layers 125 of the first bonding portion 121a-1 contact each other will be described in detail for convenience of description.

When the first bonding portion 121a-1 is folded, the second insulating layers 125 of the first bonding portion 121a-1 may contact each other. In this case, the first insulating layers 123 of the first bonding portion 121a-1 may be exposed to the outside. As described above, when the first bonding portion 121a-1 is folded, the second bonding portion 121a-2 is arranged to correspond to the first bonding portion 121a-1 and then thermal-bonded. In this case, the first insulating layers 123 of the first bonding portion 121a-1 that are exposed to the outside are arranged to correspond to the first insulating layers 123 of the second bonding portion 121a-2 and then thermal-bonded. The second insulating layers 125 of the first bonding portion 121a-1 may contact each other and may be thermal-bonded. In particular, in that case, the first insulating layers 123 of the first bonding portion 121a-1 and the first insulating layers 123 of the second bonding portion 121a-2 are thermal-bonded and bonded to each other by using same or similar materials, and thus not only the first bonding portion 121a-1 and the second bonding portion 121a-2 have a good bonding force, and a thermal expansion coefficient is the same, and thus but also a separation, etc. caused by thermal expansion on a bonded interface of the first bonding portion 121a-1 and the second bonding portion 121a-2 may be effectively prevented. Also, since the second insulating layers 125 of the first bonding portion 121a-1 are formed of the same material, a good bonding force may be secured when thermal bonding process is performed.

When the above process is being performed or is completely performed, portions of the first sealing portion 121a other than the first bonding portion 121a-1 and the second bonding portion 121a-2 may be bonded in a lengthwise direction. In more detail, when the first bonding portion 121a-1 is bonded to the second bonding portion 121a-2, since the first sealing portion 121a is configured as a closed circuit, surfaces of the first sealing portion 121a facing each other in a lengthwise direction of the first sealing portion 121 amay be thermal-bonded to each other.

When the bonding of the first sealing portion 121a is performed, the pouch body 121b and the first can 122a may be thermal-bonded to each other. In this regard, a bonding method is the same or similar as described above, and thus a detailed description thereof will be omitted.

When the above process is completed, the first sealing portion 121a of the exterior member 120 may be sealed, and the second sealing portion 121c of the exterior member 120 may be open. Thereafter, the second sealing portion 121c is sealed after the electrode assembly 110 and an electrolyte (not shown) are inserted into the exterior member 120, thereby completely manufacturing the secondary battery 100.

In this case, a method of sealing the second sealing portion 121c may be the same or similar as described above. For example, the second sealing portion 121c may include a third bonding portion 121c-1 and a fourth bonding portion 121c-2 that form both ends of the second sealing portion 121c. In this case, the third bonding portion 121c-1 and the fourth bonding portion 121c-2 are respectively the same or similar as the first bonding portion 121a-1 and the second bonding portion 121a-2 described above, and thus, detailed descriptions thereof will be omitted.

The third bonding portion 121c-1 and the fourth bonding portion 121c-2 may be thermal-bonded and connected to each other by folding one of the third bonding portion 121c-1 and the fourth bonding portion 121c-2. A method of connecting the third bonding portion 121c-1 and the fourth bonding portion 121c-2 is the same or similar as the method of connecting the first bonding portion 121a-1 and the second bonding portion 121a-2 described above, and thus, a detailed description thereof will be omitted.

When the third bonding portion 121c-1 and the fourth bonding portion 121c-2 are completely bonded as described above, the electrode assembly 110 and the electrolyte may be completely sealed by bonding the second sealing portion 121c is bonded in a lengthwise direction of the second sealing portion 121c,. In this case, the first electrode tab 112 and the second electrode tab 114 which are connected to the electrode assembly 110 may penetrate the second sealing portion 121c, and may be partially exposed to the outside.

After the above process is completed, the secondary battery 100 may be variously formed. For example, the secondary battery 100 may be formed by applying pressure to the secondary battery 100 disposed on a jig to have a curved surface of a predetermined radius of curvature or at least one radius of curvature.

When the above process is performed, external pressure may be directly applied to the exterior member 120 or internal pressure of the exterior member 120 may be increased due to the external pressure. In this case, the can 122 may provide rigidity in order to endure a part of the external pressure or an increase of the internal pressure. In addition, the pouch 121 provides elasticity, thereby preventing damage which may occur when the secondary battery 100 is modified.

Therefore, damage of the secondary battery 100 which may occur during a process of modifying the secondary battery 100 in various forms may be prevented. Also, since the secondary battery 100 may be modified by using small power, it is easy to manufacture the secondary battery 100 in various forms.

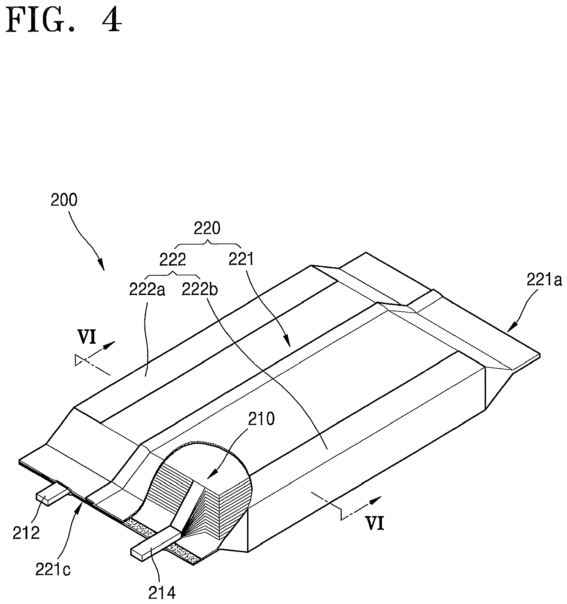

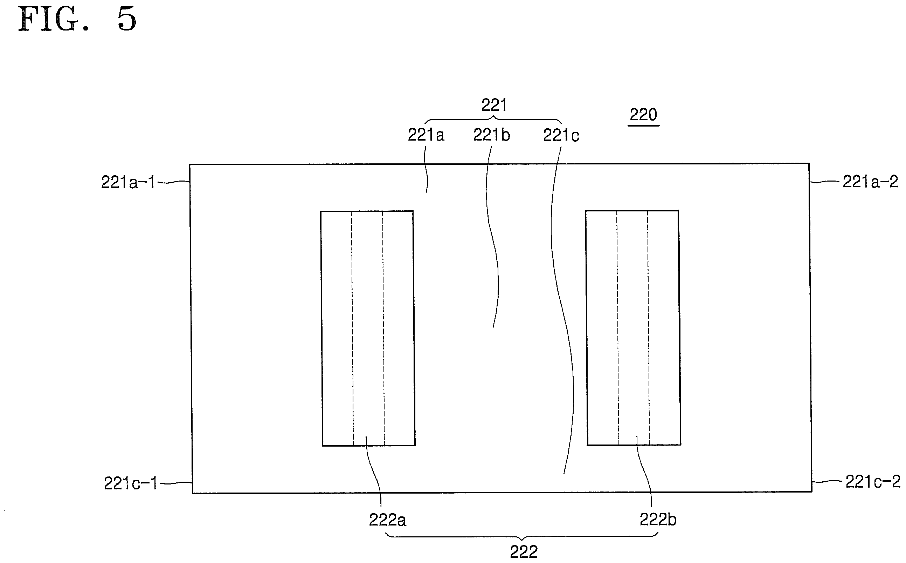

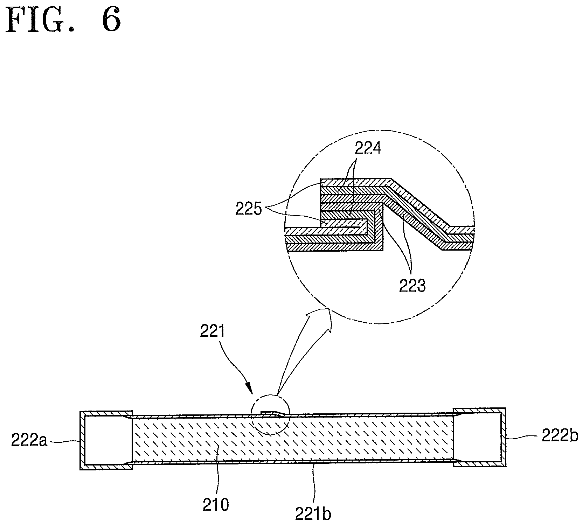

FIG. 4 is a perspective view of a secondary battery 200 according to another embodiment. FIG. 5 is a development view of an exterior member 220 of FIG. 4. FIG. 6 is a cross-sectional view taken along a line IV-IV' of FIG. 4.

Referring to FIGS. 4 through 6, the secondary battery 200 may include an electrode assembly 210 and the exterior member 220. In this case, the electrode assembly 210 may be substantially the same as the electrode assembly 110 described with reference to FIGS. 1 through 3, and thus detailed descriptions of the electrode assembly 210 will be omitted.

The exterior member 220 may include a can 222 and a pouch 221. In this case, the can 222 and the pouch 221 are substantially the same as the can 122 and the pouch 121, and thus detailed descriptions of the can 222 and the pouch 221 will be omitted.

The number of pouch 221 may be one. In this case, the pouch 221 may have a rectangular shape. The pouch 221 may include a first sealing portion 221a, a pouch body 221b, and a second sealing portion 221c. Also, the first sealing portion 221a includes a first bonding portion 221a-1 and a second bonding portion 221a-2, and the second sealing portion 221c may include a third bonding portion 221c-1 and a fourth bonding portion 221c-2.

When a method of manufacturing the secondary battery 200 is examined, a first can 222a and a second can 222b may be bent. If the electrode assembly 210 is inserted into the first can 222a and the second can 222b, the first can 222a and the second can 222b may be respectively arranged on sides of the electrode assembly 210.

When the above process is completed, the first sealing portion 221a and the second sealing portion 221c may be thermal-bonded to each other. The first bonding portion 221a-1 of the first sealing portion 221a and the second bonding portion 221a-2 of the first sealing portion 221a are bonded to each other, and the third bonding portion 221c-1 of the second sealing portion 221c and the fourth bonding portion 221c-2 of the second sealing portion 221c may be bonded to each other. Also, both ends of the pouch body 221b may be bonded to each other. A method of bonding each of the above-listed components may be a method of bonding the first sealing portion 221a and the pouch body 221b to first insulating layers 223 of the second sealing portion 221c, or bonding the first sealing portion 221a and the pouch body 221b to second insulating layers 225 of the second sealing portion 221c, as described with reference to FIGS. 1 through 3.

When the above process is completed, the first sealing portion 221a is thermal-bonded and may seal a surface of the exterior member 220. In this case, a method of sealing the exterior member 220 is substantially the same as the above-described method, and thus a detailed description regarding the method will be omitted.

The electrode assembly 210 is inserted into the second sealing portion 221c which is open and then the electrolyte (not shown) is injected into the same. Then, the second sealing portion 221c is thermal-bonded. In this case, a first electrode tab 212 and a second electrode tab 214 penetrate the second sealing portion 221c, and portions thereof may be exposed to the outside.

When the above process is completed, the secondary battery 200 may be deformed by using a jig or the like. Pressure of which intensity is diverse or strength may be applied to the secondary battery 200. In particular, if the secondary battery 200 has a curved surface having curvature, pressure of which intensity is diverse or strength may be applied to the secondary battery 200. In this regard, the can 222 has rigidity in order to endure the pressure or strength applied to the secondary battery 200, and the pouch 221 may provide elasticity to the secondary battery 200 when the secondary battery 200 is deformed.

Therefore, damage which may occur when the secondary battery 200 is variously deformed may be prevented. Also, since the secondary battery 200 may be deformed with low pressure, shapes of the secondary battery 200 may vary.

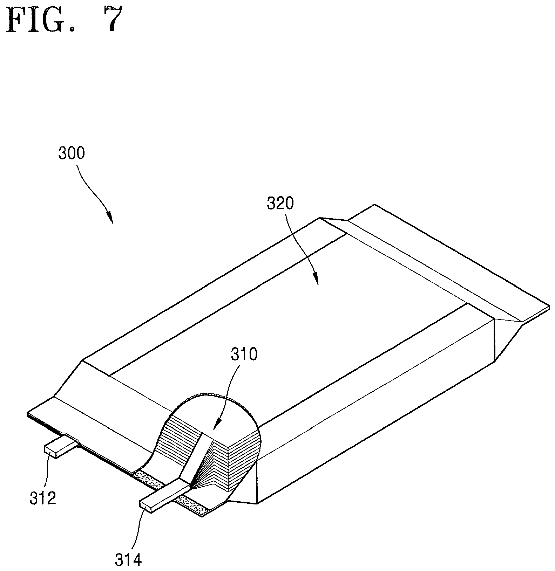

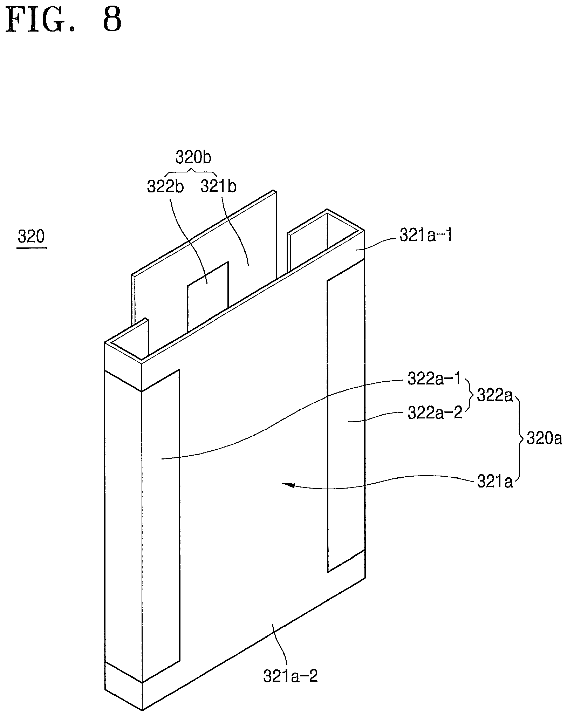

FIG. 7 is a perspective view of a secondary battery 300 according to another embodiment. FIG. 8 is a development view of a first exterior member 320a and a second exterior 320b member of FIG. 7.

Referring to FIGS. 7 and 8, the secondary battery 300 may include an exterior member 320 and an electrode assembly 310. In this case, the electrode assembly 310 is substantially the same as the electrode assembly 110 described with reference to FIGS. 1 through 3, and thus a detailed description regarding the electrode assembly 310 will be omitted.

The exterior member 320 may include the first exterior member 320a and the second exterior member 320b which are connected to each other and seal the electrode assembly 310. At least one of the first exterior member 320a and the second exterior member 320b may include a pouch (not shown) which is flexible and a can (not shown) which is connected to the pouch and is formed of a material having a higher hardness than the pouch. For example, only the first exterior member 320a may include the pouch and the can. As another example, only the second exterior member 320b may include the pouch and the can. As another example, both the first exterior member 320a and the second exterior member 320b may include the pouch and the can. Hereinafter, however, a case where the first exterior member 320a and the second exterior member 320b may include the pouch and the can will be described in detail for convenience.

As described above, the pouch may include first insulating layers (not shown), metal layers (not shown), and second insulating layers (not shown). In this case, the first insulating layers, the metal layers, and the second insulating layers are substantially the same as above, and thus detailed descriptions regarding the first insulating layers, the metal layers, and the second insulating layers will be omitted.

The first exterior member 320a may include a first pouch 321a and at least one can 322a. The number of can 322a may vary according to necessity, and hereinafter, a case where the can 322a includes a first can 322a-1 and a second can 322a-2 will be described in detail for convenience.

The second exterior member 320b may include a second pouch 321b or may include the second pouch 321b and at least one can 322b. The number of the can 322b may vary according to necessity, which is substantially the same as the number of the first exterior member 320a. Hereinafter, the second exterior member 320b includes the second pouch 321b and the can 322b, and the can 322b of the second exterior member 320b will be referred to as a third can 322b for convenience.

The first pouch 321a and the second pouch 321b may have various shapes. For example, the first pouch 321a may have substantially the same shape as the pouches 121 and 221 described with reference to FIGS. 1 through 6. Also, the second pouch 321b may have substantially the same shape as the pouches 121 and 221 described with reference to FIGS. 1 through 6. Hereinafter, for convenience, the first pouch 321a is the same as the pouch 121 described with reference to FIGS. 1 through 3, and the second pouch 321b has a rectangular shape which is similar to the shape of the pouch 221 described with reference to FIGS. 4 through 6.

As shown in FIGS. 7 and 8, the first pouch 321a, the first can 322a-1, and the second can 322a-2 are variously arranged. In this case, the first pouch 321a, the first can 322a-1, and the second can 322a-2 may be connected to each other, and the first can 322a-1 and the second can 322a-2 may be separated from each other. In particular, the first pouch 321a may have various shapes such as a '[' shape, an 'I' shape, or a rectangular shape. Hereinafter, however, a case where the first pouch 321a has the rectangular shape will be described in detail for convenience.

The second pouch 321b and the third can 322b may also be variously arranged. For example, the second pouch 321b may have a rectangular shape, and the third can 322b may be inserted into a center of the second pouch 321b. Also, it is possible for the second pouch 321b to have a '[' shape and for the third can 322b to be arranged in an open area of the second pouch 321b. Hereinafter, a case where the second pouch 321b may have the rectangular shape and the third can 322b is inserted into the center of the second pouch 321b will be described in detail for convenience.

When a method of manufacturing the secondary battery 300 is examined, the electrode assembly 310, the first exterior member 320a, and the second exterior member 320b may be manufactured first. In this case, a method of manufacturing the first exterior member 320a and the second exterior member 320b is substantially the same as the method described with reference to FIGS. 1 through 3, and thus a detailed description regarding the manufacturing method of manufacturing the first exterior member 320a, and the second exterior member 320b will be omitted.

When the above process is completed, the first exterior member 320a and the second exterior member 320b may be thermal-bonded to each other. In particular, both ends of the first pouch 321a may be bonded to those of the second pouch 321b. In this case, as shown in FIG. 7, the first can 322a-1 and the second can 322a-2 may be curved, and a method of curving the first can 322a-1 and the second can 322a-2 is substantially the same as above.

As described above, when the ends of the first pouch 321a are respectively bonded to the ends of the second pouch 321b, the method of bonding the ends of the first pouch 321a to those of the second pouch 321b may be substantially the same as the method of bonding the first bonding portion 121a-1 to the second bonding portion 121a-2. In particular, ends of one of the first pouch 321a and the second pouch 321b are bent and contact ends of the other of the first pouch 321a and the second pouch 321b. Then, the ends of the first pouch 321a and the second pouch 321b are thermal-bonded to each other.

When the above process is completed, a first sealing portion 321a-1 of the first pouch 321a may be attached to the second pouch 321b and then sealed. In this case, a second sealing portion 321-2 of the first pouch 321a is open, and thus an open area of the exterior member 320 may be formed.

After the electrode assembly 310 is inserted into the open area of the exterior member 320, the second sealing portion 321-2 of the first pouch 321a and the second pouch 321b are thermal-bonded and then completely sealed. A first electrode tab 312 and a second electrode tab 314 may be exposed to the outside through a gap between the second sealing portion 321-2 and the second pouch 321b.

When the secondary battery 300 is completed as described above, the first can 322a-1 and the second can 322a-2 may form a side of the secondary battery 300. Also, the third can 322b may form a center of the secondary battery 300.

When the secondary battery 300 is deformed due to external strength, the first can 322a-1 through the third can 322b may endure external strength or external pressure which is applied when the secondary battery 300 is deformed. In particular, when the secondary battery 300 is curved, the third can 322b prevents the secondary battery 300 from restoring its shape after the deformation, and thus the shape of the secondary battery 300 may be maintained.

As described above, when the external strength or external pressure is applied to the first pouch 321a and the second pouch 321b, elasticity or a restoring force with regard to internal pressure applied by at least one of the electrolyte (not shown) in the exterior member 320 and the electrode assembly 310 may be provided.

Therefore, damage which may occur when the secondary battery 300 is variously deformed may be prevented. Also, since the secondary battery 300 may be deformed with low pressure, shapes of the secondary battery 300 may vary.

As described above, according to the one or more of the above embodiments, a shape of a secondary battery may be easily changed and the secondary battery may have rigidity.

It should be understood that the embodiments described herein should be considered in a descriptive sense only and not for purposes of limitation. Descriptions of features or aspects within each embodiment should typically be considered as available for other similar features or aspects in other embodiments.

While one or more embodiments of the invention have been described with reference to the figures, it will be understood by those of ordinary skill in the art that various changes in form and details may be made therein without departing from the scope of the invention as defined by the following claims.

## Claims

1. A secondary battery comprising:
an electrode assembly; and
an exterior member which seals the electrode assembly,
wherein the exterior member comprises:
a pouch which is flexible; and
a can which is connected to the pouch and is formed of a material having a greater hardness than that of the pouch;
the said pouch comprising a first sealing portion; a pouch body which is connected to the first sealing portion; and a second sealing portion which is arranged to face the first sealing portion and is connected to the pouch body; **characterised in that** the can is inserted into the pouch body and is connected to the first sealing portion, the second sealing portion, and the pouch body.

2. A secondary battery according to claim 1, wherein the pouch and the can are thermal-bonded and connected to each other.

3. A secondary battery according to claim 1 or 2, wherein the can forms at least one of side surfaces of the exterior member.

4. A secondary battery according to claim 3, wherein the can is bent to surround side surfaces of the electrode assembly.

5. A secondary battery according to any preceding claim, wherein the can is arranged in a center portion of the exterior member.

6. A secondary battery according to any preceding claim, wherein the exterior member is curved to have at least one radius of curvature.

7. A secondary battery according to any preceding claim, wherein each of the first sealing portion and the second sealing portion is vertically connected to the pouch body.

8. A secondary battery according to claim 7, wherein a width of the first sealing portion is different from a width of the pouch body.

9. A secondary battery according to claim 8, wherein the width of the first sealing portion is greater than the width of the pouch body.

10. A secondary battery according to any preceding claim, wherein the can is arranged in a space formed by the first sealing portion, the second sealing portion, and the pouch body.

11. A secondary battery according to claim 10, wherein at least one of an end of the first sealing portion and an end of the second sealing portion protrudes from an end of the can.

12. A secondary battery according to any preceding claim, wherein a plurality of cans are formed, and
wherein the plurality of cans are spaced apart from each other and are connected to the pouch body.

13. A secondary battery according to any preceding claim:
wherein the exterior member comprises a first exterior member and a second exterior member, wherein the first exterior member and the second exterior member are connected to each other and,
at least one of the first exterior member and the second exterior member comprises the pouch which is flexible and the can.

14. A secondary battery according to any preceding claim, wherein the exterior member comprises a flexible material.

## Patentansprüche

1. Sekundärbatterie, die Folgendes umfasst:
eine Elektrodenbaugruppe und
ein äußeres Element, das die Elektrodenbaugruppe abdichtet,
wobei das äußere Element Folgendes umfasst:
einen Beutel, der flexibel ist, und
eine Dose, die mit dem Beutel verbunden ist und aus einem Werkstoff geformt ist, der eine größere Härte hat als derjenige des Beutels,
wobei der Beutel einen ersten Abdichtungsabschnitt, einen Beutelkörper, der mit dem ersten verbunden ist, und einen zweiten Abdichtungsabschnitt, der so angeordnet ist, dass er zu dem ersten Abdichtungsabschnitt zeigt, und mit dem Beutelkörper verbunden ist, umfasst, **dadurch gekennzeichnet, dass** die Dose in den Beutelkörper eingesetzt ist und mit dem ersten Abdichtungsabschnitt, dem zweiten Abdichtungsabschnitt und dem Beutelkörper verbunden ist.

2. Sekundärbatterie nach Anspruch 1, wobei der Beutel und die Dose thermisch gebunden sind und miteinander verbunden sind.

3. Sekundärbatterie nach Anspruch 1 oder 2, wobei die Dose wenigstens eine der Seitenflächen des äußeren Elements bildet.

4. Sekundärbatterie nach Anspruch 3, wobei die Dose gebogen ist, um Seitenflächen der Elektrodenbaugruppe zu umschließen.

5. Sekundärbatterie nach einem der vorhergehenden Ansprüche, wobei die Dose in einem Mittelabschnitt des äußeren Elements angeordnet ist.

6. Sekundärbatterie nach einem der vorhergehenden Ansprüche, wobei das äußere Element gekrümmt ist, so dass es wenigstens einen Krümmungsradius hat.

7. Sekundärbatterie nach einem der vorhergehenden Ansprüche, wobei sowohl der erste Abdichtungsabschnitt als auch der zweite Abdichtungsabschnitt in Vertikalrichtung mit dem Beutelkörper verbunden ist.

8. Sekundärbatterie nach Anspruch 7, wobei sich eine Breite des ersten Abdichtungsabschnitts von einer Breite des Beutelkörpers unterscheidet.

9. Sekundärbatterie nach Anspruch 8, wobei die Breite des ersten Abdichtungsabschnitts größer ist als die Breite des Beutelkörpers.

10. Sekundärbatterie nach einem der vorhergehenden Ansprüche, wobei die Dose in einem Raum angeordnet ist, der durch den ersten Abdichtungsabschnitt, den zweiten Abdichtungsabschnitt und den Beutelkörper gebildet wird.

11. Sekundärbatterie nach Anspruch 10, wobei wenigstens eines von einem Ende des ersten Abdichtungsabschnitts und einem Ende des zweiten Abdichtungsabschnitts von einem Ende der Dose vorspringt.

12. Sekundärbatterie nach einem der vorhergehenden Ansprüche, wobei mehrere Dosen geformt sind und
wobei die mehreren Dosen voneinander beabstandet sind und mit dem Beutelkörper verbunden sind.

13. Sekundärbatterie nach einem der vorhergehenden Ansprüche,
wobei das äußere Element ein erstes äußeres Element und ein zweites äußeres Element umfasst, wobei das erste äußere Element und das zweite äußere Element miteinander verbunden sind, und
wenigstens eines von dem ersten äußeren Element und dem zweiten äußeren Element den Beutel, der flexibel ist, und die Dose umfasst.

14. Sekundärbatterie nach einem der vorhergehenden Ansprüche, wobei das äußere Element einen flexiblen Werkstoff umfasst.

## Revendications

1. Batterie secondaire comprenant :
un ensemble d'électrodes ; et
un élément extérieur qui assure l'étanchéité de l'ensemble d'électrodes ; dans laquelle :
l'élément extérieur comprend :
une poche qui est flexible ; et
un moyen de contenant et de maintien qui est connecté à la poche et qui est formé en un matériau qui présente une dureté plus importante que celle de la poche ;
ladite poche comprenant une première partie d'étanchéité ; un corps de poche qui est connecté à la première partie d'étanchéité ; et une seconde partie d'étanchéité qui est agencée de manière à ce qu'elle fasse face à la première partie d'étanchéité et qui est connectée au corps de poche ; **caractérisée en ce que** le moyen de contenant et de maintien est inséré à l'intérieur du corps de poche et est connecté à la première partie d'étanchéité, à la seconde partie d'étanchéité et au corps de poche.

2. Batterie secondaire selon la revendication 1, dans laquelle la poche et le moyen de contenant et de maintien sont liés thermiquement et connectés l'un à l'autre.

3. Batterie secondaire selon la revendication 1 ou 2, dans laquelle le moyen de contenant et de maintien forme au moins l'une de surfaces latérales de l'élément extérieur.

4. Batterie secondaire selon la revendication 3, dans laquelle le moyen de contenant et de maintien est fléchi de manière à ce qu'il entoure des surfaces latérales de l'ensemble d'électrodes.

5. Batterie secondaire selon l'une quelconque des revendications qui précèdent, dans laquelle le moyen de contenant et de maintien est agencé dans une partie centrale de l'élément extérieur.

6. Batterie secondaire selon l'une quelconque des revendications qui précèdent, dans laquelle l'élément extérieur est incurvé de manière à ce qu'il présente au moins un rayon de courbure.

7. Batterie secondaire selon l'une quelconque des revendications qui précèdent, dans laquelle chaque partie d'étanchéité prise parmi la première partie d'étanchéité et la seconde partie d'étanchéité est connectée verticalement au corps de poche.

8. Batterie secondaire selon la revendication 7, dans laquelle une largeur de la première partie d'étanchéité est différente d'une largeur du corps de poche.

9. Batterie secondaire selon la revendication 8, dans laquelle la largeur de la première partie d'étanchéité est plus importante que la largeur du corps de poche.

10. Batterie secondaire selon l'une quelconque des revendications qui précèdent, dans laquelle le moyen de contenant et de maintien est agencé dans un espace qui est formé par la première partie d'étanchéité, la seconde partie d'étanchéité et le corps de poche.

11. Batterie secondaire selon la revendication 10, dans laquelle au moins une extrémité prise parmi une extrémité de la première partie d'étanchéité et une extrémité de la seconde partie d'étanchéité fait saillie depuis une extrémité du moyen de contenant et de maintien.

12. Batterie secondaire selon l'une quelconque des revendications qui précèdent, dans laquelle :
une pluralité de moyens de contenant et de maintien sont formés ; et dans laquelle :
les moyens de contenant et de maintien de la pluralité de moyens de contenant et de maintien sont espacés les uns des autres et sont connectés au corps de poche.

13. Batterie secondaire selon l'une quelconque des revendications qui précèdent, dans laquelle :
l'élément extérieur comprend un premier élément extérieur et un second élément extérieur, dans laquelle le premier élément extérieur et le second élément extérieur sont connectés l'un à l'autre ; et
au moins un élément extérieur pris parmi le premier élément extérieur et le second élément extérieur comprend la poche qui est flexible et le moyen de contenant et de maintien.

14. Batterie secondaire selon l'une quelconque des revendications qui précèdent, dans laquelle l'élément extérieur comprend un matériau flexible.
